# EUROPEAN PATENT SPECIFICATION

(11) **EP 2 654 370 B1**
(45) Date of publication and mention of the grant of the patent: **21.04.2021**
(21) Application number: 11848689.3
(22) Date of filing: 15.12.2011
(51) Int. Cl.: H04W 88/02, G06F 3/041

(54) **MOBILE DEVICE**
MOBILE VORRICHTUNG
DISPOSITIF MOBILE

(30) Priority: 15.12.2010 KR 20100128139
(43) Date of publication of application: 23.10.2013
(73) Proprietor: Samsung Electronics Co., Ltd., Gyeonggi-do 443-742 (KR)
(72) Inventor: CHOE, Jae-Ho, Gyeonggi-do 443-742 (KR)
(74) Representative: Nederlandsch Octrooibureau
(86) International application number: PCT/KR2011/009662
(87) International publication number: WO 2012/081914

(56) References cited:
- EP-A2- 1 923 779
- EP-A2- 2 144 425
- US-A1- 2006 168 538
- US-A1- 2009 088 204
- US-A1- 2010 138 766
- US-A1- 2010 188 328
- SCHMIDT, A. ET AL.: 'How to build smart appliances?' IEEE PERSONAL COMMUNICATIONS vol. 8, no. 4, August 2001, pages 66 - 71, XP055123945

## Description

### Technical Field

The present invention relates to a mobile device. More particularly, the present invention relates to a mobile device provided with an intuitive user interface.

### Background Art

Recently, a mobile device becomes an essential item in daily life. Many people find life difficult without a cellular phone which is a typical example of the mobile device. However, a general user interface of the cellular phone is an input using a key pad or buttons, jog keys, a wheel, or a touch pad.

The method according to the conventional art like this provides user interfaces in different ways according to cellular phone designs, respectively. Folder-type or flip-type cellular phones are operated by opening the folder or flip cover and pressing a key thereof, and a slide-type cellular phone is operated by pushing up or down the slide and pressing a key thereof. Further, a cellular phone implemented by a touch pad user interface should be operated by activating a screen of the cellular phone and then looking at the screen to input a desired instruction.

A cellular phone integrating all the user interfaces described above is operated by combining the methods described above.

In a user interface according to the conventional art, a desired operation is performed by pressing a key or by performing a touch depending on what the operation is. However, this method is not intuitive in a developing user interface environment. The user desires fewer input operations for a prompt performance of an instruction or an operation.

US 2010/0138766 A1 discloses methods, systems, and techniques for presenting user interface elements on display screens, in particular smaller display screens such as those available with mobile telecommunications devices. Example embodiments provide a gravity-based user interface mechanism which causes a menu to be displayed or to disappear when the mechanism determines that the device has been tilted up or down. In some embodiments, the mechanism causes an undo or a redo operation to occur when a tilt of the side or the opposite side of the device downward is detected. In one embodiment, a tilt downward of the left side cause an undo, whereas a tilt downward of the right side causes a redo.

US 2009/0088204 A1 discloses systems and methods for a media device including one or more movement-based interfaces for interfacing with or controlling the media device.

### Detailed Description of the Invention

### Technical Problem

The present invention has been made to address at least the above problems and/or disadvantages and to provide at least the advantages described below. Accordingly, an aspect of the present invention provides a mobile device implemented with a more intuitive instruction interface.

### Technical Solution

In order to achieve this, an aspect of the present invention provides a mobile device according to claim 1, including: a screen unit on which a user interface that changes by function is displayed; a controller that changes the user interface; and a sensor unit that senses a movement of the mobile device, wherein the user interface is associated with the movement of the mobile device. At this point, the sensor unit includes at least one of an acceleration sensor, a gravity sensor, and a gyro sensor.

At this point, the sensor unit may measure a change amount of a rotation angle of the mobile device, the change amount of the rotation angle may be measured with respect to a normal state of the mobile device, and the normal state can be defined by a state in which the user interface is not activated by function.

At this point, the change amount of the rotation angle may include a horizontal change amount and a vertical change amount in the normal state. The vertical change amount at this point may be configured to be equal to or less than 95° or 43°. Further, the horizontal change amount may be configured to be equal to or less than 175°. The horizontal change amount and the vertical change amount may be configured by the user.

Meanwhile, a time limit for returning from a point at which an absolute value of the change amount of the rotation angle is maximum to the normal state may be configured to be 0.3 to 0.5 seconds. The controller may change the user interface according to the measured change amount.

Meanwhile, the user interface may be a character input environment, and the character input environment may be an environment of a change among a plurality of different languages. The different languages may be configured by including at least two selected from Korean, English, Japanese, Chinese, French, and German.

Meanwhile, the user interface may be configured by an editing function environment. At this point, in the editing function environment, an instruction performance menu required for editing is formed by a graphic user interface. At this point, the graphic user interface may be configured by including an execution button. Meanwhile, the user interface may be a video or sound control environment. The video or sound control environment may be displayed not to overlap with content displayed on the screen unit. Therefore, the size of the content displayed on the screen unit after the generation of the video or sound control environment may be changed.

The invention is defined by the subject-matter of the independent claims. Particular embodiments of the invention are set out in the dependent claims. Examples and technical descriptions of apparatuses, products and/or methods in the description and/or drawings which are not covered by the claims are presented not as embodiments of the invention but as background art or examples useful for understanding the invention

### Advantageous Effects

The present invention provides a more intuitive input-related user interface by combining a sensing technology with an input method of a mobile device. Further, the present invention maximizes the convenience of the user by reducing the input steps for a prompt instruction performance.

### Brief Description of the Drawings

FIG. 1 is a schematic diagram illustrating a mobile device according to an embodiment of the present invention;
FIGS. 2A to 2C are schematic diagrams illustrating an operation of sensing a rotation angle in a mobile device according to an embodiment of the present invention;
FIGS. 3A and 3B are diagrams illustrating an operation of inputting characters by changing the used language with respect to the slope of the mobile device according to an embodiment of the present invention;
FIGS. 4A and 4B are diagrams illustrating an operation of activating an editing function with respect to the slope of the mobile device according to another embodiment of the present invention; and
FIGS. 5A and 5B are diagrams illustrating an operation of activating a video or sound control environment with respect to the slope of the mobile device according to another embodiment of the present invention.

### Mode for Carrying Out the Invention

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Herein, with reference to the accompanying drawings, embodiments of the present invention will be described in detail.

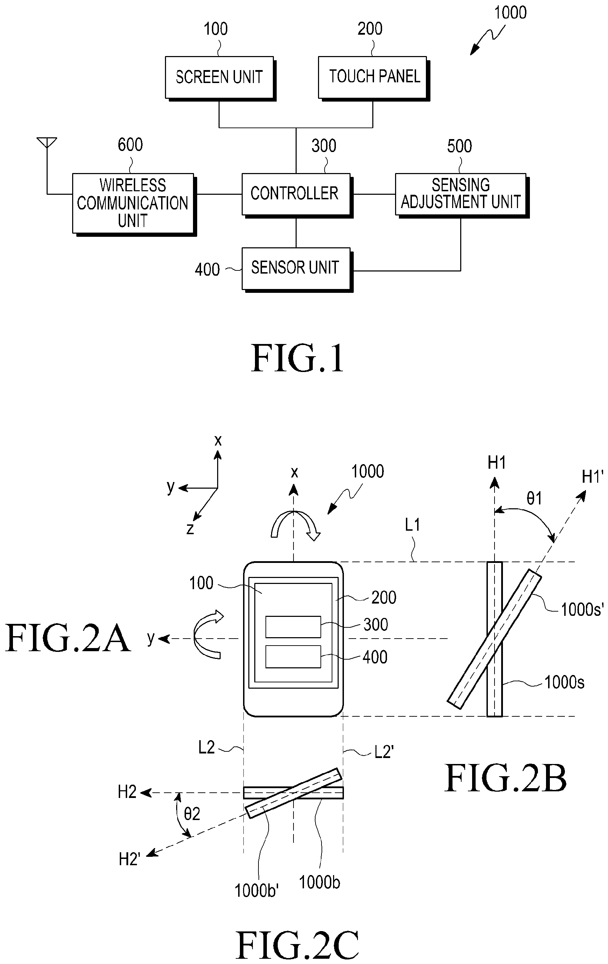

FIG. 1 is a schematic diagram illustrating a mobile device 1000 according to an embodiment of the present invention. With reference to FIG. 1, the mobile device according to an embodiment of the present invention includes a screen unit 100, a touch panel 200, a controller 300 such as a CPU, and a sensor unit 400. Further, as illustrated in FIG. 1, the mobile device 1000 may further include a sensing adjustment unit 500 and a wireless communication unit 600 that wirelessly receives data from the controller 300 or receives wireless signals in the air.

The screen unit 100 is a display panel and may include one of Plasma Display Panel (PDP), Liquid Crystal Display (LCD), Organic Light Emitting Diodes (OLED), and Cathode Ray Tube (CRT). However, the screen unit in a mobile device according to an embodiment of the present invention is a part where a user interface is displayed. At this point, the user interface may change in various ways according to functions.

The touch panel 200 is disposed on the screen unit 100 and enables a user to perform specific instructions by touching various menu screens displayed on the screen unit 100. The touch panel 200 may be a resistive type, a capacitive type, a ultrasonic type, an infrared type, an optical type, or a flexural wave type. The touch panel 200 is disposed on the front surface of the mobile device 1000, and the screen unit 100 is disposed under the touch panel 200. The user interface displayed by the screen unit 100 is viewed by the user through the transparent touch panel 200.

The controller 300 controls overall operations of the mobile device 1000. In addition, the mobile device 1000 according to an embodiment of the present invention changes the user interface mentioned above according to touch information of the touch panel 200.

The sensor unit 400 is a sensor that senses movements of the mobile device 1000, and includes at least one of an acceleration sensor, a gravity sensor, a shock sensor, GPS and an acceleration sensor. The mobile device 1000 according to an embodiment of the present invention is configured so that the user interface changes according to the result sensed by the sensor unit 400. In more detail, the user interface itself is associated with the movement of the sensor unit. The detailed configuration of the sensor unit 400 will be described later.

The sensing adjustment unit 500 adjusts the sensing error of the sensor unit 400. Especially, when an angle is measured by using an acceleration sensor, translational components of the acceleration sensor are adjusted. Especially, if an angle is detected by using a gyro sensor, a slope is estimated by adding or subtracting integration errors. Though it is not illustrated in the drawings, the sensing adjustment unit 500 according to an embodiment of the present invention performs a temperature adjustment by preventing a drift effect caused by integration errors.

The mobile device 1000 according to an embodiment of the present invention is described as follows in more detail. FIGS. 2A to 2C are schematic diagrams illustrating an operation of sensing a rotation angle by a sensing unit of a mobile device according to an embodiment of the present invention.

FIG. 2A is a front view of the mobile device 1000. The front surface or the screen shape of the mobile device 1000 generally is a rectangle having a width wider than a height (corners thereof may be round or angular). In a direction in which a user vertically sees the front surface of the mobile device 1000, the mobile device 1000 has left-side and right-side surfaces in a width direction and upper-side and lower-side surfaces in a longitudinal direction (that is, a vertical direction). FIG. 2B illustrates a right-side surface 1000s of the mobile device 1000 along guide lines L1 and L1'. Further, FIG. 2C illustrates a lower-side surface 1000b of the mobile device 1000 along mobile guide lines L2 and L2'. The reference numerals 1000s' and 1000b' refer to right-side and lower-side surfaces of the mobile device after rotation, respectively.

As illustrated in FIGS. 2A to 2C, the sensor unit 400 included in the mobile device according to an embodiment of the present invention measures change amounts θ1 and θ2 in rotation angles of the mobile device 1000. The change amounts in the rotation angles are obtained by measuring angular changes from normal states 1000s and 1000b with respect to the vertical direction (the x-axis direction in FIGS. 2A to 2C) and the horizontal direction (the y-axis direction in FIGS. 2A to 2C). The z-axis direction is a perpendicular direction from the front surface of the mobile device 1000, and the x-axis direction is a longitudinal direction of the mobile device 1000, and the y-axis direction is a width direction of the mobile device 1000. Further, the x-axis, y-axis, and z-axis directions are perpendicular from one another. Here, the normal state refers to a state in which a new user interface for implementing a new function is not activated. Therefore, in the normal states (or initial angular positions) indicated as the reference numerals 1000b and 1000s, a device is not required to be horizontal or vertical to the ground. Wherever the device is spatially positioned, a state right before a new user interface is executed becomes a normal state.

Here, a minimum value (that is, the minimum value in one direction) of the vertical change amount θ1 to change a user interface is 95°. That is, until the vertical change amount reaches 95°, the change of the user interface is not caused. If the vertical change amount is over 95°, when the actual mobile device is grasped, the visibility of the screen becomes deteriorated, and according to the structure of a wrist, the mobile device grasped by hand may not be vertically rotated over 95°. Meanwhile, a minimum value of the vertical change amount θ1 (the minimum value in the opposite direction) may be set to be 43° (-43°), because when the mobile device grasped by hand is vertically rotated, the threshold value of a minimum rotation value in one direction (a direction in which an wrist bends back) is 95° in consideration of the visibility and the structure of the wrist. However, it is difficult that the minimum rotation in the opposite direction (a direction in which the wrist bends forward) exceeds 43° in consideration of the structure of the wrist.

In addition, in the same manner, the minimum value of the horizontal change amount is set to be 175°. In the case of the horizontal rotation, since the rotation reset time is much faster than that of the vertical rotation in consideration of the structure of the wrist, the value of 175° is optimum by subtracting a margin value from 180° turning over the mobile device.

The vertical change amount θ1 and the horizontal change amount θ2 may be set to be measured over time. That is, the mobile device generally moves or rotates a lot, due to the nature of the mobile device. If the mobile device senses the movement or the rotation, and the rotation is over the minimum value of the vertical or horizontal change amount, another menu screen may be generated, that is, another user interface may be activated. In this case, the generation of the menu screen or the activation of the user interface may be unexpectedly performed.

Therefore, the mobile device according to an embodiment of the present invention may be configured to execute a new user interface only when the mobile device returns to a normal state after rotation (when the mobile device rotates in an opposite direction from the rotated angular position H1' or H2' back to the initial angular positions HI or H2). Here, if the mobile device returns back to the normal state, it is difficult to return to exactly the same position as the initial first normal state. Therefore, a value having a margin value from the initial horizontal or vertical normal state may be set as a second normal state. Here, the margin may be set to be less than 8°. This is because the maximum value of the angular difference of the first normal state (the initial angular position) from the second normal state (the returned angular position), which approximates to the first normal state in consideration of the joint structure of the human body is 8° according to various experiment results. Therefore, it is not necessary to limit the lower numerical value.

Meanwhile, the horizontal change amount and the vertical change amount described above may be configured to be automatically set by obtaining information on the previous habitual usage of the user. Further, the change amounts may be set in a setting screen of the mobile device.

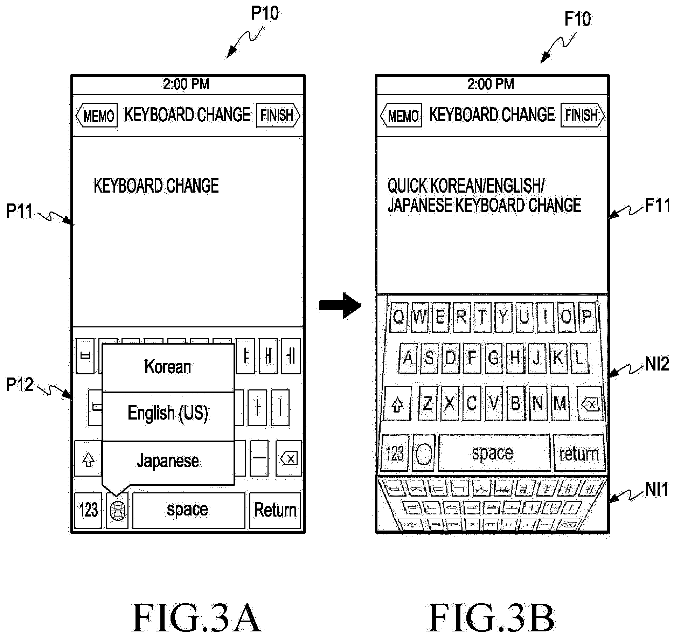

An effect of the mobile device according to an embodiment of the present invention will be described in more detail in the followings. FIGS. 3A and 3B are diagrams illustrating an effect of the mobile device according to an embodiment of the present invention. FIGS. 3A and 3B are diagrams illustrating an operation of inputting characters by changing the used language with respect to the slope of the mobile device according to an embodiment of the present invention.

FIG. 3A illustrates a screen P10 for a memo application according to the conventional art, in which a memo window P11 is displayed on the upper portion of the screen and an input interface P12 is displayed on the lower portion of the screen.

As illustrated in FIG. 3A, according to the conventional art, in order to change the language at the time of inputting the characters, the language is selected by a separate input of a change button B, in the way of a touch or a click.

FIG. 3B illustrates a screen F10 for a memo application according to an embodiment of the present invention wherein a memo window F11 is displayed on the upper portion of the screen and input interfaces NI1 and NI2 are displayed on the lower portion of the screen.

As described above, the mobile device according to an embodiment of the present invention senses the vertical change amount or the vertical change amount over time so that the new input interface NI1 is generated as illustrated in FIG. 3B. In FIG. 3B, in the normal state (the initial angular position) of the mobile device, only the English character input interface NI2 is displayed, and if the mobile device is rotated or returns to the initial angular position after the rotation, only the Korean character input interface NI1 is displayed. The change of the input interface may be implemented by the cube screen changing effect in which a virtual cube of which a corresponding input interface is displayed on each surface rotates as illustrated. Unlike the present embodiment, the change of the input interface like this may be implemented by a sliding screen effect in which the English character input interface NI2 slides and disappears to the left (or to the right), or upwardly (or downwardly), and the Korean character input interface NI1 slides and appears from the right (or from the left), or downwardly (or upwardly). According to an embodiment of the present invention, a new character input environment is presented. The character input environment is an environment of a change among a plurality of different characters. Further, the characters may include all the existing languages including Korean, English, Japanese, Chinese, French, German and the like.

As described above, since more than one step is omitted, the convenience of a disabled person or a user who frequently uses text input functions is maximized. Further, the embodiment of the present invention enables the intuitive usage of a mobile apparatus.

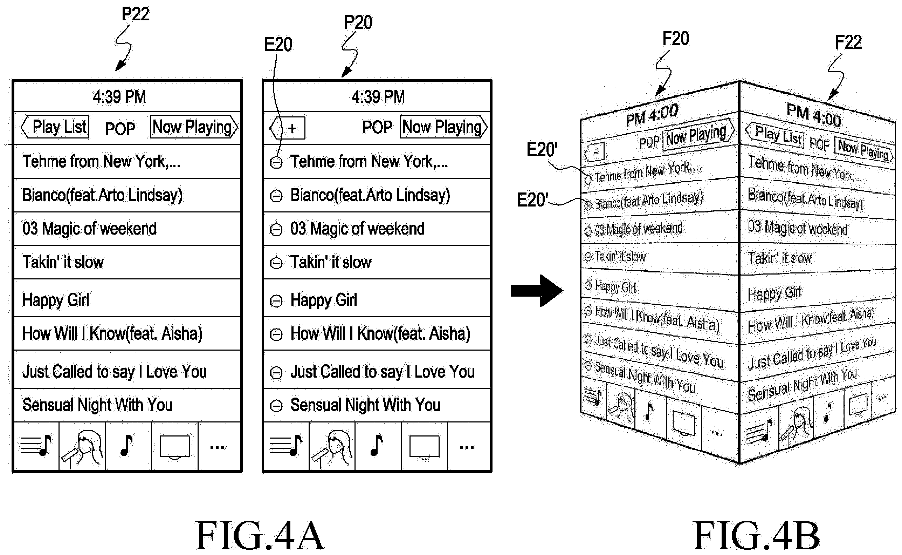

An effect of a mobile device according to another embodiment of the present invention is described in detail as follows. FIGS. 4A and 4B are diagrams illustrating an operation of activating an editing function with respect to the slope of the mobile device according to another embodiment of the present invention.

FIGS. 4A and 4B illustrate a music play list. FIG. 4A illustrates screens P20 and P22 for a music play application according to the conventional art, wherein the left screen P20 is a screen for a music play mode and the right screen P22 is a screen for a music editing mode.

As illustrated above, according to the conventional art, a function E20 of editing a play list is executed by touching each of the list items in a music editing mode or by entering a separate editing mode through a separate input and editing each of the play list.

FIG. 4B illustrates screens F20 and F22 for a music play application according to the embodiment of the present invention, wherein the left screen F20 is a screen for a music editing mode and the right screen F22 is a screen for a music play mode. In FIG. 4B, when the mobile device is displayed in a normal state, only the screen F22 for a music play mode is displayed, and when the mobile device rotates or returns back to the initial angular position after rotation, only the screen F20 for the music editing mode is displayed. The change of the input interface like this may be implemented by the cube screen changing effect in which a virtual cube of which a corresponding input interface is displayed on each surface rotates as illustrated. That is, according to an embodiment of the present invention, the mobile device senses the vertical change amount of the vertical change amount over time so that a new input interface of an editing function environment is generated. Further, as illustrated, the mobile device senses the horizontal change amount and the horizontal change amount over time so that an instruction performance menu E20' may be configured by using a graphic user interface.

In this manner, the mobile device according to another embodiment of the present invention omits more than one input step for the instruction performance. Therefore, since more than one input step is omitted according to another embodiment of the present invention, the convenience of a disabled person or a user who frequently uses text input functions is maximized. Further, the embodiment of the present invention enables the intuitive usage of a mobile apparatus.

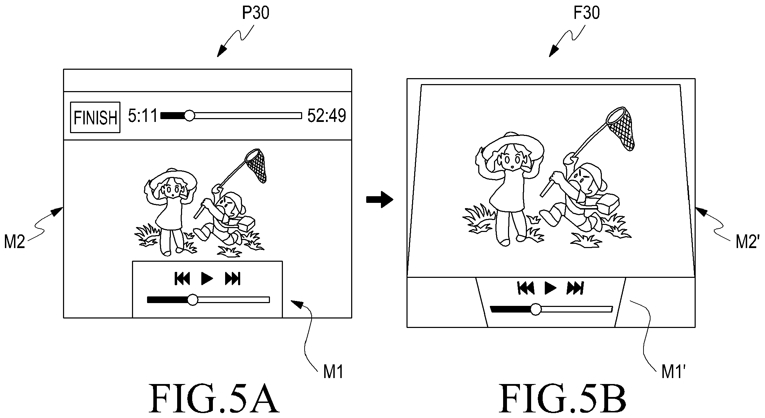

Further, an effect of the mobile device according to still another embodiment of the present invention is described in more detail. FIGS. 5A and 5B are diagrams illustrating an operation of activating a video or sound control environment with respect to the slope of the mobile device according to another embodiment of the present invention.

FIGS. 5A and 5B illustrate screens for reproducing a movie including certain content.

FIG. 5A is a diagram illustrating a screen P30 of a content application according to the conventional art, wherein a content window M2 is displayed on the upper portion of the screen, and a play menu M1 is displayed on the lower portion of the screen. Here, the play menu M1 according to the conventional art is generated on the content window M2, more particularly, overlaps with the content window M2. Further, the play menu M1 according to the conventional art is generated by a specific input (for example, a screen touch).

FIG. 5B illustrates a screen F30 of a content application according to an embodiment of the present invention, wherein a content window M2' is displayed on the upper portion of the screen, and the play menu M1' is displayed on the lower portion of the screen. In FIG. 5B, only the content window M2' is displayed when the mobile device is in a normal state (an initial angular position), and both of the content window M2' and the play menu M1' are displayed when the mobile device rotates or returns to the initial angular position after rotation. The generation of the input interface may be implemented by the cube screen changing effect in which a virtual cube of which the content window M2' and the play menu M1' are displayed on the neighboring surfaces rotates as illustrated. The mobile device according to the present invention generates a movie or sound control environment, which is a new user interface by sensing the vertical/horizontal change amount and the vertical/horizontal change amount over time, and further the movie or sound control environment is generated not to overlap with currently playing content (by changing the size or the position), thereby enabling the more intuitive usage of the device. At this point, the conventional content may be displayed to be reduced by the size corresponding to the width or the dimension of the newly generated interface. At this point, the content window and the input interface may be displayed to have perspective in the cube screen change effect. In this manner, the device according to the present embodiment maximizes the convenience of the user by reducing the input steps for a prompt instruction performance.

Although specific embodiments of the present invention have been described above, it is obvious that various modifications are possible.

The present invention may be applied to a user interface of a mobile device such as a cellular phone.

The scope of the invention is defined by the appended claims.

## Claims

1. A mobile device (1000) comprising:
a sensor unit (400);
a screen unit (100) on which a user interface that changes by function is displayed; and
a controller (300) configured to:
control the screen unit (100) to display a first user interface;
control the sensor unit (400) to sense a movement of the mobile device,
determine a change amount of a rotation angle of the mobile device with respect to an initial angular position of the mobile device, by measuring using the sensor unit, and
change from the first user interface to a second user interface according to the measured change amount, when the mobile device rotates more than a minimum change amount for changing the user interface,
wherein the changing of the user interface comprises, controlling the screen unit to display a virtual cube, with a respective one of the first user interface and the second user interface being displayed on a respective surface of the virtual cube and controlling the screen unit to display the second user interface by implementing a sliding screen effect in which the first user interface slides and disappears in a first direction, and the second user interface slides and appears from a direction opposite to the first direction .

2. The mobile device according to claim 1, wherein the sensor unit (400) includes at least one of an acceleration sensor, a gravity sensor, and a gyro sensor.

3. The mobile device according to claim 1, wherein the change amount of the rotation angle comprises one of a horizontal change amount and a vertical change amount with respect to the initial angular position.

4. The mobile device according to claim 3, wherein a minimum vertical change
amount for changing the user interface is equal to or less than 95° or 43°, and
and a minimum horizontal change amount for changing the user interface is equal to or less than 175°.

5. The mobile device according to any one of the preceding claims, wherein the controller (300) is configured to change the user interface only when the mobile device (1000) rotates more than a minimum change amount for changing the user interface to a rotated angular position and then rotates back to a returned angular position within a predetermined angular range from the initial angular position.

6. The mobile device according to claim 5, wherein a time limit for rotating back from a point at which an absolute value of the change amount of the rotation angle is maximum to the returned angular position is configured to be 0.3 to 0.5 seconds.

7. The mobile device according to any one of the preceding claims, wherein the user interface is a character input environment.

8. The mobile device according to claim 7, wherein the character input
environment is an environment of a change among a plurality of different languages, and
the different languages comprise at least two selected from Korean, English, Japanese, Chinese, French, and German.

9. The mobile device according to any one of the preceding claims, wherein the user interface is an editing function environment.

10. The mobile device according to claim 9,
wherein in the editing function environment, an instruction performance menu required for editing is formed by a graphic user interface; and
the graphic user interface comprises an execution button.

11. The mobile device according to any one of the preceding claims, wherein the user interface is a video or sound control environment.

12. The mobile device according to claim 11, wherein the video or sound control environment is displayed not to overlap with content displayed on the screen unit.

13. The mobile device according to any one of the preceding claims, further comprising a touch panel disposed on the screen unit (100),
wherein the controller (300) changes the user interface according to touch information of the touch panel and movement of the mobile device (1000).

## Patentansprüche

1. Mobile Vorrichtung (1000), welche Folgendes umfasst:
eine Sensoreinheit (400);
eine Bildschirmeinheit (100), auf welcher eine Benutzeroberfläche angezeigt wird, die sich je nach Funktion ändert; und
eine Steuerung (300), die konfiguriert ist zum:
Steuern der Bildschirmeinheit (100), um eine erste Benutzeroberfläche anzuzeigen;
Steuern der Sensoreinheit (400), um eine Bewegung der mobilen Vorrichtung zu erfassen,
Bestimmen eines Änderungsbetrags eines Drehwinkels der mobilen Vorrichtung in Bezug auf eine anfängliche Winkelposition der mobilen Vorrichtung durch Messen unter Verwenden der Sensoreinheit, und
Ändern der ersten Benutzeroberfläche in eine zweite Benutzeroberfläche gemäß dem gemessenen Änderungsbetrag, wenn sich die mobile Vorrichtung um mehr als einen minimalen Änderungsbetrag zum Ändern der Benutzeroberfläche dreht,
wobei das Ändern der Benutzeroberfläche das Steuern der Bildschirmeinheit umfasst, um einen virtuellen Würfel anzuzeigen, wobei eine jeweilige erste Benutzeroberfläche oder zweite Benutzeroberfläche auf einer jeweiligen Oberfläche des virtuellen Würfels angezeigt wird, und Steuern der Bildschirmeinheit, um eine zweite Benutzeroberfläche durch Implementieren eines Schiebebildschirmeffekts anzuzeigen, bei dem die erste Benutzeroberfläche in eine erste Richtung gleitet und verschwindet und die zweite Benutzeroberfläche aus einer der ersten Richtung entgegengesetzten Richtung gleitet und erscheint.

2. Mobile Vorrichtung nach Anspruch 1, wobei die Sensoreinheit (400) einen Beschleunigungssensor, einen Schwerkraftsensor und/oder einen Kreiselsensor umfasst.

3. Mobile Vorrichtung nach Anspruch 1, wobei der Änderungsbetrag des Drehwinkels einen waagerechten Änderungsbetrag und/oder einen senkrechten Änderungsbetrag in Bezug auf die anfängliche Winkelposition umfasst.

4. Mobile Vorrichtung nach Anspruch 3,
wobei ein minimaler senkrechter Änderungsbetrag zum Ändern der Benutzeroberfläche gleich oder kleiner als 95° oder 43° ist, und
und ein minimaler waagerechter Änderungsbetrag zum Ändern der Benutzeroberfläche gleich oder kleiner als 175° ist.

5. Mobile Vorrichtung nach einem der vorhergehenden Ansprüche, wobei die Steuerung (300) konfiguriert ist, um die Benutzeroberfläche nur zu ändern, wenn sich die mobile Vorrichtung (1000) um mehr als einen minimalen Änderungsbetrag zum Ändern der Benutzeroberfläche in eine gedrehte Winkelposition dreht und sich dann in eine zurückgegebene Winkelposition innerhalb eines vorbestimmten Winkelbereichs von der anfänglichen Winkelposition zurückdreht.

6. Mobile Vorrichtung nach Anspruch 5, wobei eine Zeitbegrenzung zum Zurückdrehen von einem Punkt, an dem ein Absolutwert des Änderungsbetrags des Drehwinkels maximal ist, in die zurückgegebene Winkelposition konfiguriert ist, um 0,3 bis 0,5 Sekunden zu sein.

7. Mobile Vorrichtung nach einem der vorhergehenden Ansprüche, wobei die Benutzeroberfläche eine Zeicheneingabeumgebung ist.

8. Mobile Vorrichtung nach Anspruch 7,
wobei die Zeicheneingabeumgebung eine Umgebung eines Änderns zwischen mehreren verschiedenen Sprachen ist, und
die verschiedenen Sprachen mindestens zwei umfassen, die aus Koreanisch, Englisch, Japanisch, Chinesisch, Französisch und Deutsch ausgewählt werden.

9. Mobile Vorrichtung nach einem der vorhergehenden Ansprüche, wobei die Benutzeroberfläche eine Bearbeitungsfunktionsumgebung ist.

10. Mobile Vorrichtung nach Anspruch 9,
wobei in der Bearbeitungsfunktionsumgebung ein zum Bearbeiten erforderliches Befehlsleistungsmenü durch eine grafische Benutzeroberfläche gebildet wird; und
die grafische Benutzeroberfläche eine Ausführungstaste umfasst.

11. Mobile Vorrichtung nach einem der vorhergehenden Ansprüche, wobei die Benutzeroberfläche eine Video- oder Tonsteuerungsumgebung ist.

12. Mobile Vorrichtung nach Anspruch 11, wobei die Video- oder Tonsteuerungsumgebung so angezeigt wird, dass sie nicht mit Inhalt überlappt, der auf der Bildschirmeinheit angezeigt wird.

13. Mobile Vorrichtung nach einem der vorhergehenden Ansprüche, welche ferner ein Touchpanel umfasst, das auf der Bildschirmeinheit (100) angeordnet ist,
wobei die Steuerung (300) die Benutzeroberfläche gemäß den Berührungsinformationen des Touchpanels und der Bewegung der mobilen Vorrichtung (1000) ändert.

## Revendications

1. Dispositif mobile (1000) comprenant :
une unité de capteur (400) ;
une unité d'écran (100) sur laquelle une interface utilisateur qui change par fonction est affichée ; et
un contrôleur (300) configuré pour :
commander l'unité d'écran (100) pour afficher une première interface utilisateur ;
commander l'unité de capteur (400) pour détecter un mouvement du dispositif mobile,
déterminer une quantité de changement d'un angle de rotation du dispositif mobile par rapport à une position angulaire initiale du dispositif mobile, en mesurant à l'aide de l'unité de capteur, et
changer de la première interface utilisateur à une deuxième interface utilisateur en fonction de la quantité de changement mesurée, lorsque le dispositif mobile tourne plus d'une quantité de changement minimale pour changer l'interface utilisateur,
où le changement de l'interface utilisateur comprend la commande de l'unité d'écran pour afficher un cube virtuel, avec une interface respective parmi la première interface utilisateur et la deuxième interface utilisateur étant affichée sur une surface respective du cube virtuel et la commande de l'unité d'écran pour afficher la deuxième interface utilisateur en mettant en œuvre un effet d'écran coulissant où la première interface utilisateur glisse et disparaît dans une première direction, et la deuxième interface utilisateur glisse et apparaît depuis une direction opposée à la première direction.

2. Dispositif mobile selon la revendication 1, où l'unité de capteur (400) comprend au moins l'un parmi un capteur d'accélération, un capteur de gravité et un capteur gyroscopique.

3. Dispositif mobile selon la revendication 1, où la quantité de changement de l'angle de rotation comprend l'une parmi une quantité de changement horizontal et une quantité de changement vertical par rapport à la position angulaire initiale.

4. Dispositif mobile selon la revendication 3,
où une quantité de changement vertical minimale pour changer l'interface utilisateur est égale ou inférieure à 95° ou 43°, et
et une quantité de changement horizontal minimale pour changer l'interface utilisateur est égale ou inférieure à 175°.

5. Dispositif mobile selon l'une quelconque des revendications précédentes, où le contrôleur (300) est configuré pour changer l'interface utilisateur uniquement lorsque le dispositif mobile (1000) tourne plus d'une quantité de changement minimale pour changer l'interface utilisateur à une position angulaire tournée et ensuite tourne en arrière à une position angulaire renvoyée dans une plage angulaire prédéterminée à partir de la position angulaire initiale.

6. Dispositif mobile selon la revendication 5, où une limite de temps pour une rotation vers l'arrière à partir d'un point auquel une valeur absolue de la quantité de changement de l'angle de rotation est maximale à la position angulaire renvoyée est configurée pour être 0,3 à 0,5 secondes.

7. Dispositif mobile selon l'une quelconque des revendications précédentes, où l'interface utilisateur est un environnement d'entrée de caractères.

8. Dispositif mobile selon la revendication 7,
où l'environnement d'entrée de caractères est un environnement d'un changement parmi une pluralité de langues différentes, et
les différentes langues comprennent au moins deux sélectionnées parmi le coréen, l'anglais, le japonais, le chinois, le français et l'allemand.

9. Dispositif mobile selon l'une quelconque des revendications précédentes, où l'interface utilisateur est un environnement de fonction d'édition.

10. Dispositif mobile selon la revendication 9,
où dans l'environnement de fonction d'édition, un menu d'exécution d'instructions requis pour l'édition est formé par une interface utilisateur graphique ; et
l'interface utilisateur graphique comprend un bouton d'exécution.

11. Dispositif mobile selon l'une quelconque des revendications précédentes, où l'interface utilisateur est un environnement de commande vidéo ou audio.

12. Dispositif mobile selon la revendication 11, où l'environnement de commande vidéo ou audio est affiché pour ne pas chevaucher le contenu affiché sur l'unité d'écran.

13. Dispositif mobile selon l'une quelconque des revendications précédentes, comprenant en outre un panneau tactile disposé sur l'unité d'écran (100),
où le contrôleur (300) change l'interface utilisateur en fonction d'informations tactiles du panneau tactile et du mouvement du dispositif mobile (1000).
